(19) **Europäisches Patentamt / European Patent Office / Office européen des brevets**

(11) **EP 1 148 656 B1**

(12) **EUROPEAN PATENT SPECIFICATION**

(45) Date of publication and mention
of the grant of the patent:
**22.08.2007 Bulletin 2007/34**

(51) Int Cl.:
***H04B 1/707*** (2006.01)     ***H04L 27/233*** (2006.01)

(21) Application number: **00303383.4**

(22) Date of filing: **20.04.2000**

(54) **Method and apparatus for synchronisation in a wireless communications system**

Verfahren und Vorrichtung zur Synchronisierung in einem drahtlosen Kommunikationssystem

Dispositif et procédé de synchronisation dans un système de transmission sans fil

(84) Designated Contracting States:
**DE FI FR GB SE**

(43) Date of publication of application:
**24.10.2001 Bulletin 2001/43**

(73) Proprietor: **LUCENT TECHNOLOGIES INC.**
**Murray Hill, New Jersey 07974-0636 (US)**

(72) Inventors:
• **Ammer, Gerhard**
**80469 München (DE)**
• **Meyer, Jan Enno**
**82362 Weilheim (DE)**

(74) Representative: **Williams, David John et al**
**Page White & Farrer**
**Bedford House**
**John Street**
**London, WC1N 2BF (GB)**

(56) References cited:
**EP-A- 0 805 573**     **US-A- 5 285 472**
**US-A- 5 579 338**

EP 1 148 656 B1

**Description**

Field of the Invention

The invention relates to a synchronisation method and a receiver for a communication system in general, being subject to a frequency deviation in particular.

Prior Art

Digital wireless communication systems, in particular, digital mobile radio networks are of increasing interest for all types of data transmission. A digital radio network consists of a plurality of base stations (BS) and mobile stations (MS). For data or speech transmission a two-way link between a mobile station and a base station is established, i.e. sequences of digital symbols modulated on a carrier frequency are transmitted from the base station to the mobile station (downlink) and vice versa (uplink). These digital symbols are not necessarily of binary type, e.g. for digital radio networks four-valued complex symbols are widely used. The symbols are processed in various ways, e.g. are multiplied by code sequences before and after the modulation. A main function of the receiver in the mobile and base station is to recover the transmitted data for which timing and frequency synchronicity are crucial parameters.

When a mobile station, e.g. a mobile phone in a digital mobile radio system wants to contact a base station it has to have exact knowledge of radio frame and slot timing of the base station. In particular, this applies initially after power-up of the mobile station for the base station it wants to log on, as well as repeated continuously for neighbouring base stations that are candidates for cell re-selection (during MS idle mode) or handover (within traffic mode) or after loss of synchronisation. Also, the mobile station's receive frequency has to be made synchronous to the base station's transmit frequency with an accuracy in the range of tenths of ppm.

At the initial synchronisation after power-up of the MS or after loss of synchronisation, a considerable frequency error may reside in the received signal, due to the inaccuracy of a crystal oscillator providing a reference clock in the mobile station where the receiver carrier frequency is derived from. More particular, the frequency error is caused by a deviation of the reference clock frequency of the receiver from the frequency of the received signal.

Conventional synchronisation schemes already suffer heavily from the initial inaccuracy of regular crystal oscillators so that expensive measures have to be taken to keep this inaccuracy very low.

As carrier frequencies are limited, various multiple access techniques are used to optimally exploit the available frequency bands. The synchronisation difficulties more or less apply to all multiple access techniques, e.g. for the time division multiple access (TDMA) standard, which is used for the Global System of Mobile Communications (GSM) network. However, inadequate timing synchronisation becomes an even more severe problem for the next generation cellular mobile radio networks utilising code division multiple access (CDMA), e.g. according to the 3rd Generation Partnership Project (3GPP) wideband CDMA (WCDMA).

For CDMA the signal to be transmitted is typically spread to a multiple of its original bandwidth. The signal with spread bandwidth is less sensitive to interference and the spectral power density is reduced. Commonly, direct sequence CDMA is used, where the symbols are spread and scrambled by a code sequence before the modulation. Using a plurality of code sequences being orthogonal to each other a plurality of communication links may use the same frequency band. Due to the orthogonality of the codes, the transmitted signals can be decoded or de-spread uniquely in the receiver. A commonly used group of code sequences are so-called pseudo-noise (PN) bit sequences. CDMA, spreading/ de-spreading, scrambling /de-scrambling and pseudo-noise codes are known to those skilled in the art.

The synchronisation in a MS is usually done by searching for a known symbol sequence transmitted at a fixed position in the radio frame or slot of the common control channel of a base station. In a 3GPP WCDMA system, this is simply a sequence of 256 ones, embedded in the regular chip stream carrying information symbols. In CDMA systems, the "modulation symbols" are denoted as chips, while a certain number of chips (usually $2^h$) combine to a transmission symbol. For the case of two-dimensional symbols also the chips are complex numbers or in other words vectors in the complex plane. A detailed description can be found in 3GPP Technical Specification 25.213 version 3.1.1 (3G TS 25.213 V3.1.1) "Spreading and modulation (FDD)", available (open access) at ftp://ftp.3gpp.org and in particular ftp://ftp. 3gpp.org/Specs/December_99/25_series/. Furthermore, the chip stream is scrambled with a certain code at the transmitter and descrambled with the same known, but complex-conjugate code at the receiver, but this process is transparent if the code is time-aligned, so that for the further description it is treated as if the chips were just the ones that are transmitted.

In particular, the quality of the de-spreading in a CDMA receiver strongly depends on the timing synchronisation between the received chip stream and the code-sequence. But the timing synchronisation is deteriorated by the frequency inaccuracy in the receiver, e.g. a frequency offset between the transmitter and receiver reference clocks. A typical precision of a quartz or crystal oscillator in a mobile radio station is in the order of $\pm$ 10 ppm ($\pm$ $10^{-5}$), whereas $\pm$ 0.1 ppm or better would be desirable for an adequate de-spreading. Moreover, timing and frequency synchronisation are linked together, such that prior art methods first' have to provide a timing synchronisation before a frequency synchronisation, i.e. with the uncorrected erroneous frequency

Once a connection between the mobile station and a base station exists, the frequency of the mobile station is adjusted to the frequency of the base station e.g. by varying the driving voltage of the crystal enabling a frequency accuracy better than $\pm$ 1 ppm. A frequency accuracy in the order of $\pm$ 0.01 ppm can be achieved in a base station. However, frequency synchronisation is not available at power-up of the mobile station establishing a new link. It has also been proposed to memorise the driving voltage when the mobile station is switched off and that the driving voltage is recovered again after the next power up. However, this method is not very reliable as the conditions causing a frequency inaccuracy like environmental conditions, e.g. temperature may have changed in the meantime. Also efforts for temperature stabilising of the oscillator have been taken to increase its accuracy, but this is expensive and highly power-consuming. Concluding, none of the previously proposed methods achieve a satisfactory timing and frequency synchronisation, in particular, at a reasonable effort for a mobile handset.

US 5,579,338 discloses a CDMA receiver which uses two stages to synchronise a received spread spectrum signal with a local pseudo-noise signal: on initial acquisition and synchronisation tracking stage; and a subsequent stage which produces an error signal to correct for a frequency offset in the local oscillator.

Therefore, an object of the present invention is to provide a method and/or device with improved synchronisation capabilities for a communicating system.

Another object is to provide a synchronisation method and/or device for timing synchronisation in a communication system comprising a receiver and transmitter, being cheap and robust against a frequency error or a deviation of the frequency of the received signal from the reference frequency of the receiver, in particular against a frequency offset between the transmitter and the receiver.

A further object is to provide a method and/or device for a communication system, providing a combined frequency and timing synchronisation.

A further object is to provide a synchronisation method and/or device for a communication system providing a less deteriorated and high output signal from a received chip sequence.

A further object is to provide a synchronisation method and/or device for a communication system providing an improved quality and reliability of data transmission.

Still a further object is to provide a method for simple, reliable and low power consuming frequency synchronisation of a communication system, having improved capabilities compared to the prior art.

Surprisingly simple, these objects are already achieved by the features of the independent claims.

According to one aspect of the present invention, there is provided a synchronisation method for a communication system comprising a transmitter and a receiver, said transmitter transmitting an electromagnetic signal comprising a signal portion and said receiver receiving said electromagnetic signal, wherein said communication system is subject to a deviation of the frequency of the received electromagnetic signal from a reference frequency of the receiver, said method comprising:

> a1) subdividing a signal section of the received signal in at least a first and second subsection, said signal section being associated with said transmitted signal portion,
> b1) integrating over the first subsection for obtaining a first partial sum defining a first complex number or vector and integrating over the second subsection for obtaining a second partial sum defining a second complex number or vector, said first and second complex number or vector defining an angle in between,
> c1) estimating said angle,
> characterised in that the method further comprises:
> d1) rotating the first complex number or vector by said angle to be substantially in phase with the second complex number or vector,
> e1) summing the first and second partial sum for obtaining a first sum defining a third complex number or vector and
> f1) using the third complex number of vector for the synchronisation by determining a maximum of the amplitude of the third complex number or vector.

According to another aspect of the present invention, there is provided a receiver for an electromagnetic signal, being subject to a frequency deviation of the frequency of the received electromagnetic signal from a reference frequency of the receiver, preferably for the method according to one of the preceding claims, comprising:

> a5) means for subdividing a signal section of the received electromagnetic signal in at least a first and second subsection,
> b5) an integration device for the first and second subsection providing a first and second partial sum, respectively, said first and second complex number or vector defining an angle in between and being associated to the first and second subsection, respectively,

c5) an estimation device for the angle between the first and second complex number or vector,
characterised in that the receiver further comprises:
d5) a device for rotation of the first and/or second complex number or vector by said angle and,
e5) a summation device for the first and second partial sum for obtaining a first sum defining a third complex number or vector, and
f5) a synchronisation device for performing a synchronisation by determining a maximum of the amplitude of the third complex number.

Advantageously, the negative effect of the frequency error or the deviation of the reference frequency from the frequency of the received signal on each partial sum is reduced by the ratio of the partial sums length to the length of the whole signal section. The invention further yields a derotation angle for the partial sums. Therefore, the partial sums can be derotated to be substantially in phase, such that the deleterious effect of the phase shift due the frequency error is at least reduced for the summation over the partial sums. Therefore, the first sum of the partial sums yields a high amplitude and is insensitive or robust against an unknown but substantially fixed frequency error, in particular, against a frequency offset between a transmitter and a receiver. It should be noted that the terms integrating or integration are used here as generic term including discrete addition as well as continuous integration or the like.

Moreover, from the derotation angles the frequency deviation can be estimated and can be used for frequency synchronisation.

Furthermore, the processing effort of the method according to the invention is acceptable, e.g. the basic code matched' filter operation has not to be changed, it can be simply segmented, The processing of the segment results is well suited for digital signal processors as it contains mainly correlations and multiplications. Preferably, just one division is performed, but good sub-optimal implementations may avoid that or make even a realisation in hardware possible and attractive.

The invention provides timing synchronisation of a communication system, preferably, of a mobile radio terminal, mobile station or handset towards the network including joins estimation and compensation of the frequency error. Thus, the invention enables a joint timing and frequency synchronisation.

Preferably, the transmitted electromagnetic signal is a digital broadband signal according to a CDMA standard. The CDMA signal comprises a stream of complex chips modulated on the carrier frequency of about 2 GHz. At the receiver, the signal section, being a chip sequence of the stream is subdivided into k subsections being chip subsequences, which are all integrated or summed up separately, yielding k partial sums. Preferably, this subdivision factor k is an integral/power of two, as this reduces the processing, effort. For each partial sum the phase shift or rotation angle is determined and the derotation is performed. After adding up, an amplitude for peak search is achieved, which is highly insensitive against a frequency error. Then the found maximum used to lock the timing synchronisation in the receiver.

Preferably, the signal section is multiplied by a transmitted complex-conjugated signal portion to which the signal section is associated, said complex-conjugated signal portion being prior known to the receiver, in particular being a complex-conjugated code sequence, to recover the original symbols to be transmitted.

However, it should be clear to those skilled in the art, that the invention is not restricted to CDMA systems, it is also applicable to nearly all other digital or analogue wireless communication systems, e.g. according to the time division multiple access (TDMA) standard of the global system for mobile communication (GSM). Moreover, the invention is not even restricted to wireless data transmission at all, it is also applicable to wire-bound communication, e.g. using electrical or optical data transmission.

Advantageously, the system works with cheap crystal oscillators, for example having an accuracy of $\pm$ 10 to $\pm$ 20 ppm resulting in an initial frequency error of $\pm$ 20 to $\pm$ 40 kHz frequency error in the 3GPP case utilising a carrier frequency of about 2 GHz, as a reference for deriving the receive frequency in a mobile phone. Furthermore, there is no need to provide a temperature stabilisation or compensation, therefore the invention provides a power saving method and device. However, memorising and restoring the driving voltage may still be utilised to further increase the insensitivity to a frequency error.

Most advantageously, the invention is used for a first downlink reception after a mobile station is switched on or a loss of synchronisation has occurred. In this case the mobile station has no timing or frequency synchronisation data available for the first downlink message of the base station, resulting in the most deleterious effect on the data transmission and synchronisation. Whereas, when a first timing and frequency synchronisation have been conducted the frequency error is considerably reduced due to the already achieved locking of the mobile station's frequency towards the base station's frequency. However, even if the frequency error is already corrected during an existing link a residual unknown frequency deviation lasts, e.g, in the so-called random access channel (RACH) for the uplink case. For example, such a residual frequency deviation results from a Doppler-shift due to a movement of the mobile station. E.g. a roundtrip Doppler-shift of about $\pm$ 2 kHz results of a radial velocity of 500 km/h in the 3GPP case, which is a factor of 10 to 20 less than what is expected for the initial link establishment. However, it still causes a degradation of the processed reception signal. Furthermore, it is typically summed over a sequence of 16 known symbols (so-called preamble) in the uplink case, therefore again increasing the deleterious effect by a factor of 16. Thus the resulting effect is of a comparable extent as for the one symbol downlink case. However, as the synchronisation method according to the invention is also insensitive against this residual frequency error it also improves the reliability and quality of the uplink transmission.

Preferably, the chip sequence being subdivided comprises one or more complex transmission symbols, as this reduces the processing or mathematical effort.

Preferably, the chip sequence comprises a training sequence of known symbols, as they can be used to determine an auto-correlation function, in the receiver.

Preferably, a reliability forecast value for the quality of the estimation of the frequency deviation or error is computed. This forecast value can be extracted advantageously easily from an auto-correlation function of one of the partial sums.

The reliability forecast can be used for a further development of the invention. In this embodiment in a first step the forecast value is computed using a first subdivision factor. On the basis of the resulting forecast a decision is made which second subdivision factor should be used for the synchronisation in a second step. The first and second subdivision factor might be different. If they are different, this results in a different number of subsequences to be summed over and derotated in the second step compared to the summation in the first step. This method is advantageous, as the mathematical effort for the second step can be adapted to the estimated frequency error. Furthermore, summation and derotation yields a slightly decreased signal-to-noise-ratio, therefore it is advantageous to restrict the subdivision factor to a minimum extent necessary due to the frequency error. The second subdivision factor might also be equal to one, i.e. no subdivision takes place in the second step, completely avoiding said decreased signal-to-noise-ratio. For example, it can be started with a subdivision factor of eight. If a low reliability forecast is computed, the second subdivision factor may be chosen to be smaller, for instance four or two avoiding false synchronisation. In case the reliability forecast is extremely low, falling back to the conventional method might even be beneficial.

Brief description of the Figures

It is shown in

Fig. 1    a diagram of standard QPSK symbols,
Fig. 2    a block diagram of an idealised transparent view of a locked synchronisation sequence with frequency error
Fig. 3    a block diagram of a signal propagation path including some real world impairments,
Fig. 4    a block diagram of a code-matched filter for the prior art search method,
Fig. 5    a diagram of the relative sum amplitude in dB as a function of the frequency error in Hz,
Fig. 6.    a block diagram of the method according to the invention showing a subdivision of a 256 chip synchronisation sequence into 8 subsequences and
Fig. 7    a block diagram of the method according to the invention showing derotation and summation of 8 partial sums.

Detailed Description

The invention is explained in more detail and in view of preferred embodiments below. Furthermore a method according to the prior art is shown. Reference is made to the attached drawings. Like numerals are designating similar elements in different embodiments of the invention and the presented prior art method.

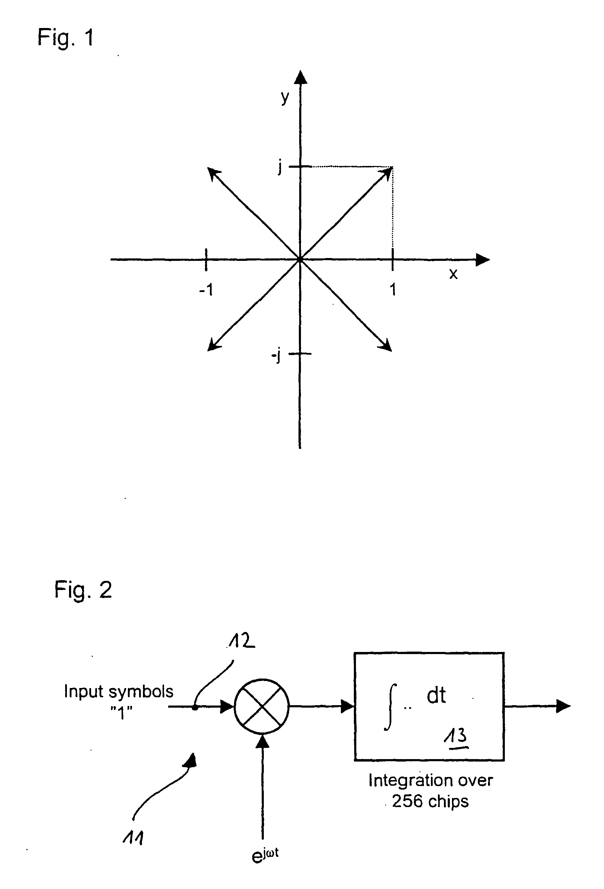

Fig. 1 shows four complex symbols according to the quadrature phase shift keying (QPSK) modulation in the complex plane spanned by the real axis x and the imaginary axis y. The four symbols are represented by the complex numbers or vectors in the complex plane (+1+j), (-1+j), (-1-j) and (+1-j), where j is the imaginary unit. A typical digital signal on a common control channel consists of a sequence of data symbols having a rate of 15000 per second. Before transmission, the signal is spread and scrambled with a code sequence. The code sequence frequency is by a factor $2^N$ (spreading factor) larger than the data symbol frequency. Here the spreading factor is 256, i.e. N = 8, resulting in a spread spectrum signal of 3.84 million chips per second (3.84 Mcps) and a sequence of 256 chips per data symbol. In the receiver the spread spectrum signal is de-scrambled and de-spread with the complex-conjugate of the spreading and scrambling code to recover the original symbols..

Referring now to Fig, 2, an, idealised receiver 11 is shown including an integrator 13. A received signal consisting of a chip sequence or input symbols 12 is multiplied with the complex-conjugate of the spreading and scrambling code (not shown) and further processed in the receiver 11. The chip sequence 12 is subject to the unknown and time-dependent phase shift $e^{j\omega t}$ resulting from an angular frequency error $\omega$. In the integrator 13 a summation or integration over the 256 chips takes place to increase the signal height. After the integrator 13 the amplitude of the outgoing signal 14 is determined (not shown). If the timing would be perfect all chips would add coherently resulting in an ideal amplitude of the sum or integral equal to 256 times the chip amplitude. However, when a frequency offset between the received chip sequence 12 and the reference frequency in the receiver occurs, the amplitude of the integral decreases according to the phase drift of the chips relative to each other.

The detection of the integral amplitude is used to lock the timing and frequency synchronisation. Therefore, a reduced amplitude has a negative effect on the reliability of the synchronisation.

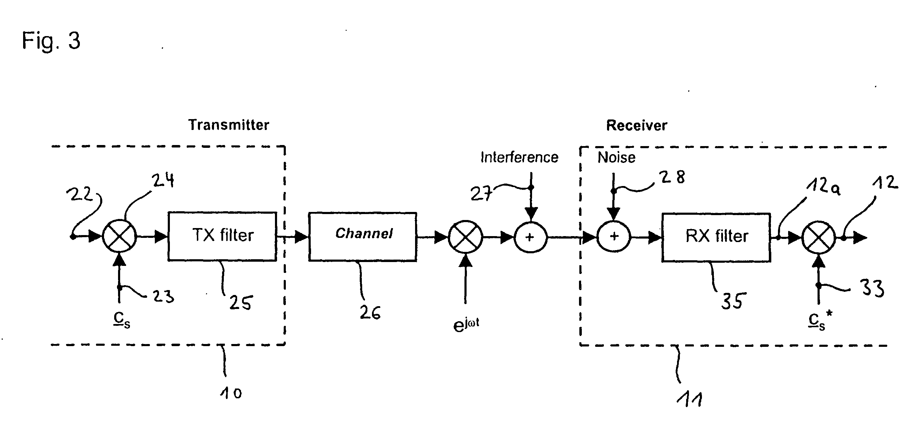

In a real-world system, there are also a bunch of impairments like filtering in the transmitter 10 and receiver 11, the mobile radio channel, noise, interference from other base stations or from other code channels on the same base station, and again the frequency error. A model for these typical impairments and a part of the signal processing are shown in Fig. 3. A digital signal 22 to be transmitted and consisting of a sequence of transmission symbols is spread and scrambled with a code sequence $\underline{c}_s$ 23 in step 24 resulting in a sequence of complex chips or chip vectors in the complex plane. The signal is filtered by a transmitter filter 25 and transmitted by an antenna (not shown). The transmission link is represented by channel 26 and the signal is subject to a time-dependent phase shift $e^{j\omega t}$ due to a frequency error. Further impairments like interference 27, e.g. from other base stations and noise 28 in the receiver 11 affect the signal. In the receiver 11 the signal is filtered by a receiver filter 35 and the filtered signal 12a is multiplied by the complex-conjugate $\underline{c}^*_s$ 33 of code sequence $\underline{c}_s$ 23 to provide a signal 12 consisting of a sequence of chips or chip sequence.

It should be noted here that in Fig. 3 the phase shift $e^{j\omega t}$ caused by the angular frequency error $\omega$ is shown between the transmitter 10 and the receiver 11, whereas $e^{j\omega t}$ is shown in the receiver 11 according to Fig. 2. Actually, the influence of the frequency error has no specific position in a communication system as it is caused by a difference in the reference frequencies of the transmitter 10 and the receiver 11, therefore, being some kind of general feature of the whole communication system.

Apart from the frequency error, it is here sticked to the idealised view of the absence of all these impairments in order to get a clear view of the invention. In praxi, these impairments of course affect the computations with some error signal, but do not change the principle.

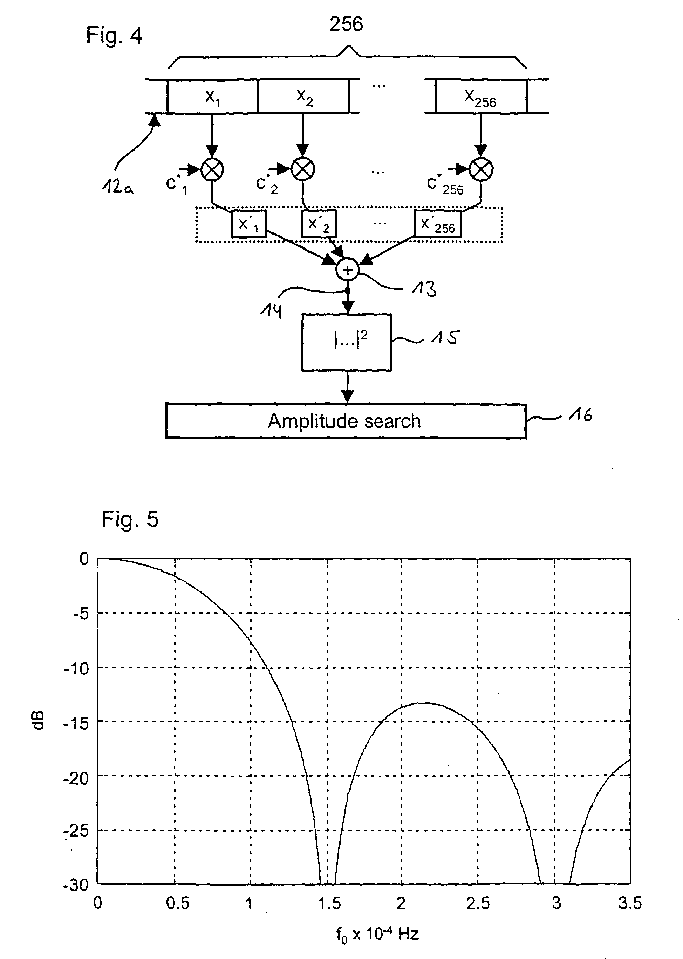

The conventional method of searching for the embedded chip sequence of 256 chips, shown in Fig. 4 in detail, is, to sum up the received signal of 256 chips after descrambling. This is done at least each time the signal for a new chip is received (e.g. each time a new signal sample is taken). The signal 12a consists of a continuous stream of chip sequences, each embedding 256 chips $x_1, x_2, ..., x_{256}$. The 256 chips $x_1, x_2, ..., x_{256}$ represent one spread data symbol which has to be recovered by integrating or summing over the 256 chips $x_1, x_2, ..., x_{256}$. The signal chips $x_1, x_2, ..., x_{255}$ are de-scrambled by multiplying with code sequence chips $c^*_1, c^*_2, ..., c^*_{256}$, respectively to recover the chips as provided before the spreading and scrambling 24 in the transmitter 10. It is summed over de-scrambled chips $x'_1, x'_2, ..., x'_{256}$ in the integrator 13. After a summation over the chips $x'_1, x'_2, ..., x'_{256}$ the absolute value or amplitude of the sum is determined in step 15. The resulting sequence of sums is then searched for a distinct amplitude peak, which indicates the lock of the synchronisation sequence in step 16.

If the synchronisation sequence is locked, all the ones are (idealised) transparent when summing up. But, if there is a time shift (no lock), then scrambling and descrambling do not fit together and the resulting scrambled signal sums up to zero (ideally, in mean). However, in reality there is some variance from the zero mean due to the non-ideal scrambling code and to the time-limited nature of the sequence of ones. This conventional method works perfect in the absence of frequency error, but with frequency error, the resulting sum yields:

$$A(\omega_0) = \sum_{l=-128}^{127} e^{j\omega_0 l T_c} \qquad (1)$$

with:

$\omega_0$ = const, being the angular frequency error,
$\omega_0 = 2\pi f_0$, $f_0$ being the frequency error,
$T_c$ being the chip duration and l the chip number

**[0044]** For further theory, the transition to continuous time is made. This is a valid approximation if the rotating angle per chip due to the frequency error is very small, which holds in this case. Anyway, the time-discrete processing is the replica from the time-continuous original.

Sc, replacing the sum by integration, and using $t_0$ for the integration length, equal to the synchronisation sequence length, $A(\omega_0)$ reads:

$$A(\omega_0) = \int_{-\frac{t_0}{2}}^{\frac{t_0}{2}} e^{j\omega_0 \tau} d\tau . \tag{2}$$

After executing the integration $d\tau$, $A(\omega_0)$ reads:

$$A(\omega_0) = t_0 \cdot \frac{2}{\omega_0 t_0} \cdot \sin\left(\frac{\omega_0 t_0}{2}\right) = t_0 \cdot \mathrm{sinc}\left(\frac{\omega_0 t_0}{2}\right) . \tag{3}$$

Fig. 5 shows the amplitude of $A(\omega_0)$ according to equation (3).

From equation (3), it follows:

- The amplitude of the sum follows a sinc function (sinc(x) represents a sin(x)/x function) over the frequency error at a given fixed synchronisation sequence length.
- The maximum amplitude of the sum can be achieved only in the absence of frequency error ($\omega_0 = 0$) and it is proportional to the correlation sequence length $t_0$.
- The amplitude of the sum equals zero, if $f_0 t_0$ is any integer value except zero or - equivalently - if $(\omega_0 t_0)$ /2 is any integer multiple of $\pi$ except zero.
- In the particular 3GPP case, with $t_0$ corresponding to 256 chips at a rate of 3.84 Mcps, the first zero crossing is reached at a frequency error of $f_0 = \pm 15$ kHz, which corresponds to about $\pm 7.5$ ppm crystal oscillator frequency error.
- A 1 dB degradation results from 4 kHz (2 ppm) frequency error, and 8 kHz (4 ppm) give 4. 5 dB degradation.

However, the typical frequency error of regular crystal oscillators is in the range of $\pm 10$ to $\pm 20$ ppm or about $\pm 20$ to $\pm 40$ kHz in 3GPP; so that, disadvantageously, this method is not suitable to be used with regular crystals.

If the frequency error would be known, it could be compensated for chip by chip or sample by sample. However this would result in an enormous processing effort. Also, unfortunately, the frequency error is not known.

Another approach is shortening the number of chips to sum up and thus using only part of the transmitted synchronisation sequence at the receiver. Since the time $t_0$ to sum over is a factor in the argument of the sinc function (see equation (3)), the influence of frequency error decreases at the same rate as $t_0$ decreases. But in this case, also the amplitude of the sum decreases and the peak is less distinct and harder to find.

At this point it should also be clear that for the uplink case, where it is typically summed over 16 symbols, the negative affect of the frequency error is increased by a factor of 16, i.e. proportionally to the number of symbols to be summed over.

Therefore, a challenge for the present invention is to design a method, a receiver and further components cf a communication system which work equally or almost equally good under unknown frequency error as the conventional method does in the absence of frequency error. The target range for the frequency error is $\pm 10$ to $\pm 20$ ppm, or about $\pm 20$ to $\pm 40$ kHz in 3GPP.

The method according to the invention provides a joint estimation and compensation of the frequency error, and a subdivision or segmentation of the sum into k partial sums $P_n$ over time $t_1 = t_0/k$ each, with coherent recombination.

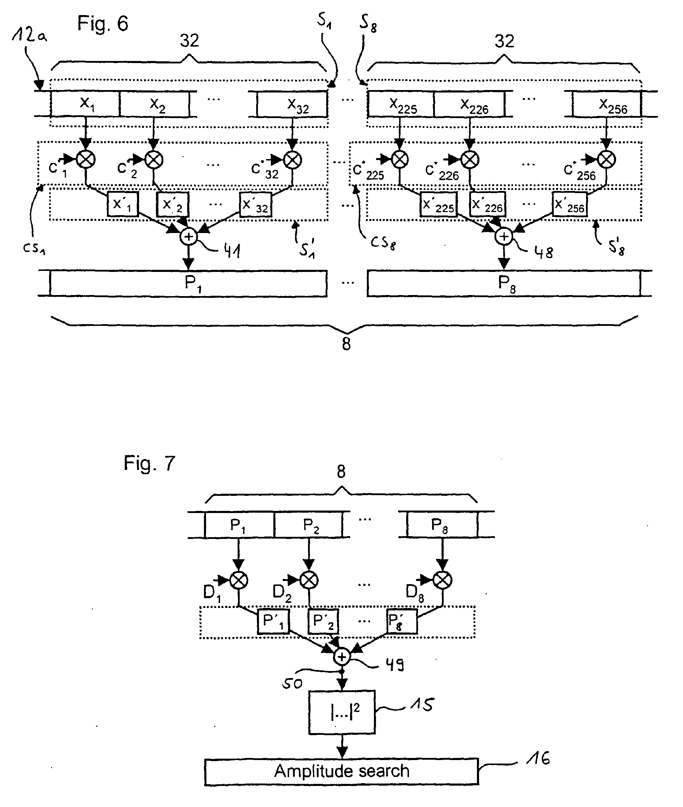

Fig. 6 shows the functional principle of an exemplary embodiment of the invention for k = 8 partial sums of a 256 synchronisation sequence.

The signal 12a consists of a continuous stream of chip sequences, each chip sequence embedding 256 chips $x_1, x_2, ..., x_{256}$, wherein typically, but not necessarily, each chip sequence represents one spread data symbol. Each chip sequence $x_1, x_2..., x_{256}$ is subdivided into 8 equally sized chip subsequences $S_1$ to $S_8$, $x_1, x_2, ..., x_{32}$ to $x_{225}, x_{226}, ..., x_{256}$, respectively, each containing 32 chips. Equivalently, the code sequence $\underline{c}^*_s$ is subdivided into 8 equally sized subsets $CS_1$ to $CS_8$, $c^*_1, c^*_2, ..., c^*_{32}$ to $c^*_{225}, c^*_{226}, ..., c^*_{256}$, respectively. The signal chips $x_1, x_2, ..., x_{32}$ of the subsequence $S_1$ are de-scrambled by multiplying with the respective code chips of subset $c^*_1, c^*_2, ... c^*_{32}$, respectively. Equivalently, de-scrambling takes place for the other chip subsequences $S_2$ to $S_8$, $x_{33}, x_{34}, ... , x_{64}$ to $x_{225}, x_{226}, ... x_{256}$ with code subsets $CS_2$ to $CS_8$, $c^*_{33}, c^*_{34}, ... c^*_{64}$ to $c^*_{225}, c^*_{226}, ..., c^*_{256}$, respectively. It is further summed over the de-scrambled 8' chip subsequences $S'_1$ to $S'_8$, in 8 integrators 41 to 48 separately, resulting in 8 partial sums $P_1$ to $P_8$.

So, in a first step, k partial sums are computed:

$$P_n(\omega_0) = \int_{n \cdot t_1 - t_1/2}^{n \cdot t_1 + t_1/2} e^{j\omega_0 \tau} d\tau \qquad (4)$$

with: n = 0...k-1 and $t_1 = t_0/k$.

This transforms to:

$$P_n(\omega_0) = e^{j\omega_0 n t_1} \cdot t_1 \cdot \mathrm{sinc}\left(\frac{\omega_0 t_1}{2}\right) \qquad (5)$$

From equation (5) the inventors found the following surprising results:

- The effect of frequency error on the partial sums through the sinc function is relieved by a factor of k, meaning e.g. that the first zero-crossing goes from 15 kHz (see Fig. 5) to k15 kHz, as $P_n(\omega_0)$ is equivalent to $A(\omega_0)$ except that it is stretched by a factor of k on the $f_0$-axis. In other words, the effect of the typical frequency error of $\pm$ 10 to $\pm$ 20 ppm of the crystal affects the partial sum like a $\pm$ 1.25 to $\pm$ 2.5 ppm frequency error would affect the whole sum.
- The maximum amplitude of a partial sum is only 1/k of the original whole sum.
- The partial sums rotate by an angle of $\omega_0 t_1$ from one to the next.

The next problems to be solved are to estimate the angle $\omega_0 t_1$, derotate the partial sums and sum them up. The result, then, is that the achievable amplitude is identical to the conventional method, but the influence of frequency error is such as if it were less by a factor of k.

<u>Estimation of the angle $\omega_0 t_1$ corresponding to the frequency error</u>

The discrete auto-correlation function (ACF) for the partial sums are introduced :

$$ACF(m) = \frac{1}{k-m} \sum_{n=0}^{k-m-1} P_n(\omega_0) \cdot P_{n+m}^*(\omega_0) = e^{-jm\omega_0 t_1} \cdot t_1^2 \cdot \mathrm{sinc}^2\left(\frac{\omega_0 t_1}{2}\right), \qquad (6)$$

with $P_n^*$, being the complex-conjugate of $P_n$. Here, the ACF(0) and ACF (1) are needed:

$$ACF(0) = \frac{1}{k} \sum_{n=0}^{k-1} P_n(\omega_0) \cdot P_n^*(\omega_0) = t_1^2 \cdot \mathrm{sinc}^2\left(\frac{\omega_0 t_1}{2}\right) \qquad (7)$$

which is nothing else than the mean energy in a partial sum, or the mean square of the amplitude.

$$ACF(1) = \frac{1}{k-1} \sum_{n=0}^{k-2} P_n(\omega_0) \cdot P_{n+1}^*(\omega_0) = e^{-j\omega_0 t_1} \cdot t_1^2 \cdot \mathrm{sinc}^2\left(\frac{\omega_0 t_1}{2}\right) \qquad (8)$$

This ACF (1) value does already have an angle that is she derogation angle $-\omega_0 t_1$. So, to perform the derotation of the partial sums $P_n(\omega_0)$, it is only required to multiply each of them with its respective derotation value $D_n$ defined by:

$$D_n = e^{-j\omega_0 n t_1} = \left(\frac{ACF(1)}{|ACF(1)|}\right)^n \qquad (9)$$

The summation over the partial sums is illustrated in Fig. 7. The 8 partial sums $P_1$ to $P_8$ are derotated by derotation angles $D_1$ to $D_8$, respectively. Derotated partial sums $P'_1$, to $P'_8$ are added in a summation unit or integrator 49 yielding a main sum $\sigma(\omega_0)$, 50 according to:

$$\sigma(\omega_0) = \sum_{l=0}^{k-1} P_l(\omega_0) D_l(\omega_0) \qquad (10)$$

Due to the derotation the partial sums are substantially, in phase, therefore, the frequency error does not or nearly not affect the summation over the partial sums. After summation over the partial sums $P'_1$ to $P'_8$, the absolute value or amplitude of the main sum 50 is determined in unit 15. Then, the amplitude of the one whole main sum 50, is used for the peak or amplitude maximum search in unit 16 as in the conventional case.

It should be noted, that in a particularly advantageous embodiment of the invention, the subdivision factor k is equal to the number of chips in the chip sequence, such that a derotation angle is determined for each single chip. Then the partial sums collapse to only a single chip.

Another advantageous achievement of the described embodiment of the present invention is, that by calculating the auto-correlation function ACF(m) with m ≠ 0, in particular, ACF(1) a surprisingly simple method has been found to estimate the frequency error, which is described in detail as follows. By choosing m the range for a unique frequency error estimation can be traded against the resolution. It should be noted that, therefore; it is an inherent feature of the present invention to jointly provide timing and frequency synchronisation.

From the angle $-\omega_0 t_1$ of the ACF(1) also the frequency error is derived and can be used e.g. for crystal compensation prior to next synchronisation steps. Other methods for estimating the angle should work as well, but this one seems to the inventors to be especially simple and smart.

Computer simulations have been performed for the 3GPP synchronisation, with k = 8, meaning 8 partial sums over 32 chips each

In the impairment-free case, the expected behaviour (peak amplitudes following the two different sinc curves, frequency error estimation) could be reproduced exactly. With additive white gaussian noise (AWGN), the frequency error estimation has of course some variance.

The overall synchronisation performance in the frequency error free case is about 2 dB. AWGN worse for the new scheme compared up the conventional scheme, but the break even point is reached at a frequency error of about 5.6 kHz (2.8 ppm). The new scheme has with k = 8 a degradation from its maximum amplitude due to frequency error of only 0.4 dB and 1.7 dB at 20 kHz and 40 kHz, respectively (10 ppm, 20 ppm).

The performance loss of the present scheme is due to bad derotation angle estimation, such that an attenuation takes place where the synchronisation sequence should be seen, and an amplification takes place for the noise.

The inventors strongly assume to be able to address this problem by the following proposed method, however no simulation data is available yet.

The ACF(1) and the ACF(0) both have the same correlation power in the ideal case. In the presence of impairments, ACF(0) still is the mean power of the partial sums, while ACF(1) is going down. If the signal is noise only, like it is approximately the case when searching at the 'wrong place', then also ACF(1) is noise with zero mean.

So, the absolute value of the ratio of ACF(1) over ACF(0) is proposed as a forecast $\phi$ for the reliability of the angle or frequency error estimation:

$$\phi = \left|\frac{ACF(1)}{ACF(0)}\right| \qquad (11)$$

If $\phi$ is close to one, then the forecasted reliability is excellent. In a region around 0.5, the result may still be usable, however dangerous to do so. Close to zero, the result is pretty much useless, no derotation should be performed and no frequency error estimation should be made.

Best thresholds are not yet simulated, but the method is judged very promising.

Having a reliability forecast a further preferred embodiment of the invention can be provided. First the reliability forecast according to equation (11) is computed. If the forecast value $\phi$ shows excellent reliability (i.e. it is close to 1), then the error in estimating the frequency deviation should be very small and the method shown in Figs. 6 and 7 is conducted being much more robust against the frequency error. If $\phi$ is not close to 1 the estimation of the frequency deviation is probably bad and the conventional method as shown in Fig. 4. is performed. A main advantage of combining the conventional method with the new one is, that in the case where no or nearly no frequency error occurs the about 2dB worse noise resulting from the subdividing method are by-passed.

In a further preferred embodiment a reliability forecast value is determined with a first value of k, e.g. in the simplest case k = 8 and depending on the reliability forecast another value of k, higher or lower, is used for subdivision, derotation and summation. Parameters for the selection of k may also be dependent on the quality of the quartz, environmental conditions, a previously estimated frequency error or the like. Advantageously, by this the mathematical effort of the method can be adapted to an adequate amount.

Concluding, a new method for making the synchronisation scheme in a mobile phone system robust against frequency error has been designed, which can be used with a cheap and simple crystal oscillator. Care has been taken not to blow up the processing effort, e.g. the basic code matched filter operation is not changed, it's only segmented.

## Claims

1.  A synchronisation method for a communication system comprising a transmitter (10) and a receiver (11), said transmitter (10) transmitting an electromagnetic signal comprising a signal portion and said receiver (11) receiving said electromagnetic signal, wherein said communication system is subject to a deviation of the frequency of the received electromagnetic signal from a reference frequency of the receiver (11), said method comprising:

    a1) subdividing a signal section $(x_1, x_2,...x_{256})$ of the received signal (12a) in at least a first and second subsection $(S_1, S_2)$, said signal section $(x_1, x_2 ...x_{256})$ being associated with said transmitted signal portion,
    b1) integrating (41) over the first subsection $(S_1)$ for obtaining a first partial sum $(P_1)$ defining a first complex number or vector $(P_1)$ and integrating (42) over the second subsection $(S_2)$ for obtaining a second partial sum $(P_2)$ defining a second complex number or vector $(P_2)$, said first and second complex number or vector $(P_1, P_2)$ defining an angle in between;
    c1) estimating said angle
    **characterised in that** the method further comprises:
    d1) rotating $(D_1)$ the first complex number or vector $(P_1)$ by said angle to be in phase with the second complex number or vector $(P_2)$,
    e1) summing (49) the first and second partial sum $(P'_1, P'_2)$ for obtaining a first sum (50) defining a third complex number or vector (50); and
    f1) using the third complex number or vector (50) for the synchronisation by determining a maximum (16) of the amplitude (15) of the third complex number or vector.

2.  Method according to claim 1, wherein
    the electromagnetic signal is a digital broadband signal according to a code division multiple access standard with said signal section being a chip sequence $(x_1, x_2,...,x_{256})$ and the first and second subsection being subsequences $(S_1, S_2)$ thereof.

3.  Method according to claim 1 or 2, wherein prior to step b1) the signal section $(x_1, x_2,...,x_{256})$ is multiplied by the complex-conjugated signal portion being prior known to the receiver (11), in particular said complex-conjugated signal portion being a complex-conjugated code sequence $(c^*_1, c^*_2,...,c^*_{256})$.

4.  Method according to one of the preceding claims, wherein the transmitted electromagnetic signal comprises complex symbols modulated on a carrier frequency.

5.  Method according to one of the preceding claims, wherein the subdivided signal section $(x_1, x_2,... ,x_{256})$ comprises or substantially consists of an integer number of spread complex transmission symbols.

6.  Method according to one of the preceding claims, wherein the transmitted electromagnetic signal comprises a training sequence of one or more known symbols.

**7.** Method according to claim 1, wherein the timing synchronisation between the receiver (11) and the transmitter (10) is provided by locking the synchronisation to the maximum amplitude (16) of the third complex number or vector (50).

**8.** Method according to one of the preceding claims, wherein the signal section ($x_1, x_2,... x_{256}$) is subdivided in a number of subsections ($S_1,...,S_8$), said number being equal to the number of symbols or chips of the signal section ($x_1, x_2,...x_{256}$) and/or said number being an integral power of two.

**9.** Method according to none of the preceding claims, wherein a driving voltage for a crystal oscillator in the receiver (11) is memorised when switching off and recovered when switching on the receiver (11).

**10.** Method according to one of the preceding claims, wherein an auto-correlation function of the partial sums ($P_1,..., P_2$) is determined.

**11.** Method according to one of the preceding claims, wherein a reliability forecast for the synchronisation is computed, preferably by one or more auto-correlation functions of the partial sums ($P_1,...,P_2$).

**12.** Method according to one of the preceding claims, wherein the frequency deviation is estimated, preferably by one or more auto-correlation functions of the partial sums ($P_1,...,P_2$).

**13.** Synchronisation method according to claim 1, wherein:

the step a1) comprises subdividing a signal section ($x_1, x_2 ...x_{256}$) of the received signal, in a first number of chip subsequences ($S_1,...,S_8$), said first number being greater than two, said signal section ($x_1, x_2,... x_{256}$) being associated with said transmitted signal portion;
the step b1) comprises integrating (41,...,48) over at least two of the subsections ($S_1,...,S_8$), for obtaining at least two partial sums ($P_1,...,P_8$), respectively, each of said partial sums ($P_1,...,P_8$) defining a complex number or vector ($P_1, ..., P_8$) defining angles in between and said complex numbers or vectors ($P_1,...,P_8$) defining a first group;

the method comprises the steps of:

c2) computing a reliability forecast for the synchronisation, based on the first group of complex numbers or vectors ($P_1,...,P_8$); and

depending on the result of the reliability forecast, either:

estimating the angles or a mean angle between the complex numbers or vectors ($P_1,...,P_8$) of the first group, rotating at least one of the complex numbers or vectors ($P_1,...,P_8$) by the respective estimated angle or the mean angle, summing (49) at least two of the complex numbers or vectors ($P'_1,...,P'_8$) of the first group for obtaining a first sum (50) and using the first sum (50) for the synchronisation or
integrating (13) over substantially the whole signal section ($x_1,x_2,..x_{256}$) for obtaining a second sum (14) and using the second sum (14) for the synchronisation.

**14.** Synchronisation method according to claim 1, wherein the step a1) comprises subdividing a signal section ($x_1, x_2, ...x_{256}$) of the received signal, in a first number of chip subsequences ($S_1,...,S_8$), said first number being greater than two, said signal section ($x_1,x_2,...x_{256}$) being associated with said transmitted signal portion;
the step b1) comprises integrating (41,...,48) over at least two of the subsections ($S_1,...,S_8$), for obtaining at least two partial sums ($P_1,...,P_8$), respectively, each of said partial sums ($P_1,...,P_8$) defining a complex number or vector ($P_1,...,P_8$) defining angles in between and said complex numbers or vectors ($P_1,...,P_8$) defining a first group;
the method comprises the steps of:

c2) computing a reliability forecast for the synchronisation, based on the first group of complex numbers or vectors ($P_1,...,P_8$); and
b3) depending on the result of the reliability forecast either:

estimating the angles or a mean angle between the complex numbers or vectors ($P_1,...,P_8$) of the first group, rotating ($D_1,...D_8$) at least one of the complex number or vectors ($P_1,...,P_8$) by the respective estimated angle or the mean angle, summing (49) at least two of the complex numbers or vectors ($P'_1,...,P'_8$) of the

first group for obtaining a first sum (50) and using the first sum (50) for the synchronisation, or creating a second number of subsections ($S_1$,...$S_8$) of the signal section ($x_1$, $x_2$, ... $x_{256}$), said second number being at least two, integrating over the second number of subsections for obtaining partial sums ($P_1$,...,$P_8$) defining complex numbers or vectors ($P_1$,...,$P_8$) defining a second group, said complex numbers or vectors ($P_1$,..., $P_8$) defining angles inbetween, estimating the angles between the complex numbers or vectors ($P_1$,...,$P_8$) of the second group, rotating ($D_1$,...$D_8$) at least one of the complex numbers or vectors ($P_1$,...,$P_8$) of the second group by the respective estimated angle or the mean angle, summing (49) at least two of the complex numbers or vectors ($P'_1$,...,$P'_8$) of the second group obtaining a third sum, (50) and using the third sum for the synchronisation.

15. Method according to claim 14, wherein
the second number is larger or smaller than the first number.

16. Method according to claim 1, wherein:
said first and second sections ($S_1$, $S_2$) are of equal length; and the step c1) comprises:

> building the complex-conjugate of the first section ($S_1$) multiplying the complex-conjugate of the first section ($S_1$) by the second section ($S_2$), resulting in a third signal section, and
> integrating (41) over said third signal section, resulting in a complex number or vector.

17. Method according to claim 16, wherein
a complex auto-correlation function of the signal or a signal section is determined and the phase of said complex auto-correlation function is used for estimating the frequency of the signal.

18. Method according to claim 17, further comprising

> f4) normalising the auto-correlation function and
> g4) using the normalised auto-correlation function to estimate the angle between the first and second signal section ($S_1$, $S_2$).

19. Method according to one of claims 16 or 18, wherein the complex signal comprises or consists of a sequence of complex numbers, vectors or chips ($x_1$,$x_2$, ...$x_{256}$), in particular according to a CDMA system.

20. Method according to one of claims 1 to 15, wherein a frequency estimation according to one of claims 17 to 19 is provided, in particular for a compensation for a deviation from a reference frequency using an integral power of the normalised auto-correlation function.

21. Receiver (11) for an electromagnetic signal, being subject to a frequency deviation of the frequency of the received electromagnetic signal from a reference frequency of the receiver (11), comprising:

> a5) means for subdividing a signal section ($x_1$,$x_2$,...$x_{256}$) of the received electromagnetic signal in at least a first and second subsection ($S_1$, $S_2$),
> b5) an integration device (41, 42) for the first and second subsection ($S_1$, $S_2$), providing a first and second partial sum ($P_1$, $P_2$) defining a first and a second complex number or vector ($P_1$, $P_2$), respectively, said first and second complex number or vector ($P_1$, $P_2$) defining an angle in between and being associated to the first and second subsection ($S_1$, $S_2$), respectively,
> c5) an estimation device for the angle between the first and second complex number or vector ($P_1$, $P_2$),
> **characterised in that** the receiver comprises:
> d5) a device for a rotation ($D_1$, $D_2$) of the first and/or second complex number or vector by said angle and
> e5) a summation device (49) for the first and second partial sum ($P_1$, $P_2$) for obtaining a first sum defining a third complex number or vector (50);
> f5) a synchronisation device for performing a synchronisation by determining a maximum (16) of the amplitude (15) of the third complex number or vector.

22. Receiver (11) according to claim 21, which is adapted to a digital broadband signal according to a code division multiple access standard with the signal section being a chip sequence ($x_1$, $x_2$,...$x_{256}$) and the first and second subsection being subsequences ($S_1$,$S_2$) thereof.

**23.** Receiver (11) according to claim 21 or 22, comprising a multiplication device, in particular adapted to multiply the received electromagnetic signal by a complex-conjugated code sequence ($c^*_1$, $c^*_2$,...,$c^*_{256}$).

**24.** Receiver (11) according to one of claims 21 to 23, which is adapted to receive and process an electromagnetic signal comprising spread complex symbols modulated on a carrier frequency.

**25.** Receiver (11) according to one of claim 21 to 24, which is adapted to an electromagnetic signal comprising chip sequences each of which comprising one or more spread complex transmission symbols.

**26.** Receiver (11) according to one of claims 21 to 25, comprising a device for determination of a maximum of the amplitude of the first sum.

**27.** Receiver (11) according to claim 26, providing a timing synchronisation with the transmitter (10) using the maximum amplitude of the first sum.

**28.** Receiver (11) according to one of claims 22 to 27, providing a subdivision of the chip sequence ($x_1$, $x_2$,...$x_{256}$) in a number of chip subsequences ($S_1$, $S_8$), said number being equal to the number of chips of the chip sequence and/or said number being an integral power of two.

**29.** Receiver (11) according to one of claims 21 to 28, providing a descrambling of the signal by a pseudo-noise code sequence ($c^*_1$,$c^*_2$,...,$c^*_{256}$).

**30.** Receiver (11) according to one of claims 21 to 29, comprising a crystal oscillator powered by a driving voltage and means to memorise said driving voltage when the receiver (11) is switched off and to recover the driving voltage when the receiver (11) is switched on.

**31.** Receiver (11) according to one of claims 21 to 30, providing a reliability forecast for the synchronisation with the transmitter (10).

**32.** Receiver (11) according to one of claims 21 to 31, providing a reliability forecasts using auto-correlation functions of the partial sums.

**33.** Receiver (11) according to one of claims 21 to 32, further comprising:

a computation device for a synchronisation reliability forecast,
a device for comparing the reliability forecast with a predetermined number and
an integration device (13) for the signal section ($x_1$, $x_2$, ... $x_{256}$) providing a second sum (14).

**34.** Receiver (11) according to one of claims 21 to 33, providing a calculation of an auto-correlation function of the second sum (14).

**35.** Mobile radio terminal or handset for a digital communication network, adapted to implement the synchronisation method according to one of claims 1 to 20 for timing and/or frequency synchronisation towards the network in the downlink case.

**36.** Base station for a digital communication network, adapted to implement the synchronisation method according to one of claims 1 to 20 for timing and/or frequency synchronisation towards a mobile radio terminal or handset in the uplink case.

**Patentansprüche**

**1.** Synchronisationsverfahren für ein einen Sender (10) und einen Empfänger (11) umfassendes Kommunikationssystem, wobei der Sender (10) ein einen Signal-Teilbereich umfassendes elektromagnetisches Signal sendet und der Empfänger (11) das elektromagnetische Signal empfängt, wobei das Kommunikationssystem einer Abweichung der Frequenz des empfangenen elektromagnetischen Signals von einer Bezugsfrequenz des Empfängers (11) unterworfen ist, wobei das Verfahren umfasst:

a1) Unterteilen eines Signalabschnittes ($x_1$, $x_2$, ..., $x_{256}$) des empfangenen Signals (12a) in mindestens einen ersten und einen zweiten Unterabschnitt ($S_1$, $S_2$), wobei der Signalabschnitt ($x_1$, $x_2$, ..., $x_{256}$) mit dem gesendeten Signal-Teilbereich verknüpft ist,

b1) Integrieren (41) über den ersten Unterabschnitt ($S_1$), um eine eine erste komplexe Zahl oder einen Vektor ($P_1$) bestimmende erste Partialsumme ($P_1$) zu erhalten, und Integrieren (42) über den zweiten Unterabschnitt ($S_2$), um eine eine zweite komplexe Zahl oder einen komplexen Vektor ($P_2$) bestimmende zweite Partialsumme ($P_2$) zu erhalten, wobei die erste und die zweite komplexe Zahl oder der erste und der zweite Vektor ($P_1$, $P_2$) zwischen sich einen Winkel festlegen;

c1) Abschätzen des Winkels;

**dadurch gekennzeichnet, dass** das Verfahren ferner umfasst:

d1) Rotieren ($D_1$) der ersten komplexen Zahl oder des ersten Vektors ($P_1$) um den Winkel, der diese bzw. diesen gleichphasig mit der zweiten komplexen Zahl bzw. dem zweiten Vektor ($P_2$) macht;

e1) Aufsummieren (49) der ersten und der zweiten Partialsumme ($P'_1$, $P'_2$), um eine eine dritte komplexe Zahl oder einen dritten Vektor (50) bestimmende erste Summe (50) zu erhalten; und

f1) Verwenden der dritten komplexen Zahl oder des dritten Vektors (50) zum Synchronisieren durch Bestimmen eines Maximums (16) der Amplitude (15) der dritten komplexen Zahl oder des dritten Vektors.

2. Verfahren nach Anspruch 1, wobei das elektromagnetische Signal ein digitales Breitbandsignal gemäß einer Codemultiplexverfahrensnorm *[code division multiple access standard]* ist, wobei der Signalabschnitt eine Chip-Sequenz ($x_1$, $x_2$, ..., $x_{256}$) ist und der erste und der zweite Unterabschnitt Untersequenzen ($S_1$, $S_2$) davon sind.

3. Verfahren nach Anspruch 1 oder 2, wobei der Signalabschnitt ($x_1$, $x_2$, ..., $x_{256}$) vor dem Schritt b1) mit dem zuvor dem Empfänger (11) bekannten komplex-konjugierten Signal-Teilbereich multipliziert wird, wobei insbesondere der komplex-konjugierte Signal-Teilbereich eine komplex-konjugierte Codesequenz ($c^*_1$, $c^*_2$, ..., $c^*_{256}$) ist.

4. Verfahren nach einem der vorstehenden Ansprüche, wobei das gesendete elektromagnetische Signal komplexe, auf eine Trägerfrequenz modulierte Symbole umfasst.

5. Verfahren nach einem der vorstehenden Ansprüche, wobei der unterteilte Signalabschnitt ($x_1$, $x_2$, ..., $x_{256}$) eine ganzzahlige Anzahl gespreizter komplexer Sendesymbole umfasst oder im wesentlichen aus diesen besteht.

6. Verfahren nach einem der vorstehenden Ansprüche, wobei das gesendete elektromagnetische Signal eine Trainingssequenz aus einem oder mehreren bekannten Symbolen umfasst.

7. Verfahren nach Anspruch 1, wobei die Zeitsynchronisation zwischen dem Empfänger (11) und dem Sender (10) durch Verriegeln der Synchronisation auf die maximale Amplitude (16) der dritten komplexen Zahl oder des dritten Vektors (50) bewerkstelligt wird.

8. Verfahren nach einem der vorstehenden Ansprüche, wobei der Signalabschnitt ($x_1$, $x_2$, ..., $x_{256}$) in eine Anzahl von Unterabschnitten ($S_1$, ..., $S_8$) unterteilt wird, wobei die Anzahl gleich der Anzahl der Symbole oder Chips des Signalabschnittes ($x_1$, $x_2$, ..., $x_{256}$) ist und/oder wobei die Anzahl eine ganzzahlige Potenz von Zwei ist.

9. Verfahren nach einem der vorstehenden Ansprüche, wobei die Treiberspannung für einen Kristalloszillator in dem Empfänger (11) beim Abschalten abgespeichert und beim Einschalten des Empfängers (11) wiedergewonnen wird.

10. Verfahren nach einem der vorstehenden Ansprüche, wobei eine Autokorrelationsfunktion der Partialsummen ($P_1$, ..., $P_2$) bestimmt wird.

11. Verfahren nach einem der vorstehenden Ansprüche, wobei eine Verläßlichkeitsvorhersage für die Synchronisation berechnet wird, vorzugsweise durch eine oder mehrere Autokorrelationsfunktionen der Partialsummen ($P_1$, ..., $P_2$).

12. Verfahren nach einem der vorstehenden Ansprüche, wobei die Frequenzabweichung abgeschätzt wird, vorzugsweise durch eine oder mehrere Autokorrelationsfunktionen der Partialsummen ($P_1$, ..., $P_2$).

13. Synchronisationsverfahren nach Anspruch 1, wobei:

der Schritt a1) das Unterteilen eines Signalabschnittes ($x_1$, $x_2$, ..., $x_{256}$) des empfangenen Signales in eine erste Anzahl von Chip-Sequenzen ($S_1$, ..., $S_8$) beinhaltet, wobei die erste Zahl größer als zwei ist, wobei der Signal-

**14**

abschnitt ($x_1$, $x_2$, ..., $x_{256}$) mit dem gesendeten Signal-Teilbereich verknüpft ist;

der Schritt b1) das Integrieren (41, ..., 48) über mindestens zwei der Unterabschnitte ($S_1$, ..., $S_8$) zwecks Erhalten von mindestens zwei entsprechenden Partialsummen ($P_1$, ..., $P_8$) umfasst, wobei jede der Partialsummen ($P_1$, ..., $P_8$) eine komplexe Zahl oder einen Vektor ($P_1$, ..., $P_8$) bestimmt, welche bzw. welcher Winkel zwischen den eine erste Gruppe bildenden komplexen Zahlen oder Vektoren ($P_1$, ..., $P_8$) festlegt;

wobei das Verfahren folgende Schritte aufweist:

c2) Berechnen einer Verläßlichkeitsvorhersage für die Synchronisation, basierend auf der ersten Gruppe komplexer Zahlen oder Vektoren ($P_1$, ..., $P_8$); und,

abhängig von dem Ergebnis der Verläßlichkeitsvorhersage, entweder:

Abschätzen der Winkel oder eines mittleren Winkels zwischen den komplexen Zahlen oder Vektoren ($P_1$, ..., $P_8$) der ersten Gruppe, Rotieren von mindestens einer der komplexen Zahlen oder der Vektoren ($P_1$, ..., $P_8$) um den entsprechenden abgeschätzten Winkel oder um den mittleren Winkel, Aufsummieren (40) von mindestens zwei der komplexen Zahlen oder Vektoren ($P'_1$, ..., $P'_8$) der ersten Gruppe zum Erhalten einer ersten Summe (50) und Verwenden der ersten Summe (50) für die Synchronisation, oder Integrieren (13) über im wesentlichen den gesamten Signalabschnitt ($x_1$, $x_2$, ..., $x_{256}$) zum Erhalten einer zweiten Summe (14) und Verwenden der zweiten Summe (14) für die Synchronisation.

14. Synchronisationsverfahren nach Anspruch 1, wobei der Schritt a1) das Unterteilen eines Signalabschnittes ($x_1$, $x_2$, ..., $x_{256}$) des empfangenen Signals in eine erste Anzahl von Chip-Sequenzen ($S_1$, ..., $S_8$) beinhaltet, wobei die erste Anzahl größer als zwei ist, wobei der Signalabschnitt ($x_1$, $x_2$, ..., $x_{256}$) mit dem gesendeten Signal-Teilbereich verknüpft ist;

der Schritt b1) umfaßt das Integrieren (41, ..., 48) über mindestens zwei der Unterabschnitte ($S_1$, ..., $S_8$) zwecks Erhalten von mindestens zwei entsprechenden Partialsummen ($P_1$, ..., $P_8$), wobei jede der Partialsummen ($P_1$, ..., $P_8$) eine komplexe Zahl oder einen Vektor ($P_1$, ..., $P_8$) bestimmt, die bzw. der Winkel zwischen den eine erste Gruppe bildenden komplexen Zahlen oder Vektoren ($P_1$, ..., $P_8$) bestimmt;

wobei das Verfahren folgende Schritte beinhaltet:

c2) Berechnen einen Verläßlichkeitsvorhersage für die Synchronisation basierend auf der ersten Gruppe komplexer Zahlen oder Vektoren ($P_1$, ..., $P_8$); und,

b3) abhängig von dem Ergebnis der Verläßlichkeitsvorhersage, entweder:

Abschätzen der Winkel oder eines mittleren Winkels zwischen den komplexen Zahlen oder Vektoren ($P_1$, ..., $P_8$) der ersten Gruppe, Rotieren ($P_1$, ..., $P_8$) mindestens einer der komplexen Zahlen oder Vektoren ($P_1$, ..., $P_8$) um den entsprechenden abgeschätzten Winkel oder um den mittleren Winkel, Aufsummieren (49) von mindestens zwei der komplexen Zahlen oder Vektoren ($P'_1$, ..., $P'_8$) der ersten Gruppe zum Erhalten einer ersten Summe (50) und Verwenden der ersten Summe (50) zur Synchronisation, oder Erzeugen einer zweiten Anzahl von Unterabschnitten ($S_1$, ..., $S_8$) des Signalabschnittes ($x_1$, $x_2$, ..., $x_{256}$), wobei die zweite Zahl mindestens Zwei ist, Integrieren über die zweite Anzahl von Unterabschnitten zum Erhalten von Partialsummen ($P_1$, ..., $P_8$), die komplexe Zahlen oder Vektoren ($P_1$, ..., $P_8$) bestimmen, die eine zweite Gruppe bestimmen, wobei die komplexen Zahlen oder Vektoren ($P_1$, ..., $P_8$) Winkel dazwischen festlegen, Abschätzen der Winkel zwischen den komplexen Zahlen oder Vektoren ($P_1$, ..., $P_8$) der zweiten Gruppe, Rotieren ($D_1$, ..., $D_8$) mindestens einer der komplexen Zahlen oder Vektoren ($P_1$, ..., $P_8$) der zweiten Gruppe um den entsprechenden abgeschätzten Winkel oder um den mittleren Winkel, Aufsummieren (49) von mindestens zwei der komplexen Zahlen oder Vektoren ($P'_1$, ..., $P'_8$) der zweiten Gruppe zum Erhalten einer dritten Summe (50), und Verwenden der dritten Summe für die Synchronisation.

15. Verfahren nach Anspruch 4, wobei die zweite Zahl größer oder kleiner als die zweite Zahl ist.

16. Verfahren nach Anspruch 1, wobei
der erste Abschnitt ($S_1$) und der zweite Abschnitt ($S_2$) von gleicher Länge sind; und der Schritt c1) umfasst:

Bilden der Komplexkonjugierten des ersten Abschnittes ($S_1$), Multiplizieren der Komplexkonjugierten des ersten Abschnittes ($S_1$) mit dem zweiten Abschnitt ($S_2$), resultierend in einem dritten Signalabschnitt, und Integrieren (41) über den dritten Signalabschnitt, resultierend in einer komplexen Zahl oder in einem Vektor.

**17.** Verfahren nach Anspruch 16, wobei
eine komplexe Autokorrelationsfunktion des Signals oder eines Signalabschnittes bestimmt und die Phase der komplexen Autokorrelationsfunktion zum Abschätzen der Frequenz des Signals verwendet wird.

**18.** Verfahren nach Anspruch 17, ferner umfassend:

f4) Normalisieren der Autokorrelationsfunktion, und
g4) Verwenden der normalisierten Autokorrelationsfunktion zum Abschätzen des Winkels zwischen dem ersten Signalabschnitt ($S_1$) und dem zweiten Signalabschnitt ($S_2$).

**19.** Verfahren nach einem der Ansprüche 16 oder 18, wobei das komplexe Signal eine Sequenz komplexer Zahlen, Vektoren oder Chips ($x_1$, $x_2$, ..., $x_{256}$), umfaßt oder aus dieser besteht, insbesondere gemäß einem CDMA-System.

**20.** Verfahren nach einem der Ansprüche 1 bis 15, wobei eine Frequenzabschätzung gemäß einem der Ansprüche 17 bis 19 vorgesehen ist, insbesondere für eine Kompensation einer Abweichung von einer Bezugsfrequenz unter Verwendung einer integrierten Leistung der normalisierten Autokorrelationsfunktion.

**21.** Empfänger (11) für ein elektromagnetisches Signal, das einer Frequenzabweichung der Frequenz des empfangenen elektromagnetischen Signals von einer Bezugsfrequenz des Empfängers (11) unterworfen ist, aufweisend:

a5) eine Einrichtung zum Unterteilen eines Signalabschnittes ($x_1$, $x_2$, ..., $x_{256}$) des empfangenen elektromagnetischen Signals in mindestens einen ersten Unterabschnitt ($S_1$) und einen zweiten Unterabschnitt ($S_2$),
b5) eine eine erste Partialsumme ($P_1$) und eine zweite Partialsumme ($P_2$) liefernde Integrationsvorrichtung (41, 42) für den ersten Unterabschnitt ($S_1$) und den zweiten Unterabschnitt ($S_2$), wobei die erste Partialsumme ($P_1$) und die zweite Partialsumme ($P_2$) eine entsprechende erste bzw. zweite komplexe Zahl oder Vektor ($P_1$, $P_2$) festlegen, wobei die erste und zweite komplexe Zahl oder der erste und zweite Vektor ($P_1$, $P_2$) einen dazwischen aufgespannten bzw. mit dem ersten und dem zweiten Unterabschnitt ($S_1$, $S_2$) verknüpften Winkel festlegen,
c5) eine Abschätzvorrichtung für den Winkel zwischen der ersten komplexen Zahl und der zweiten komplexen Zahl oder dem ersten Vektor ($P_1$) und dem zweiten Vektor ($P_2$),
**dadurch gekennzeichnet, dass** der Empfänger umfasst:
d5) eine Vorrichtung für eine Rotation ($D_1$, $D_2$) der ersten und/oder zweiten komplexen Zahl oder des ersten Vektors und/oder des zweiten Vektors um den Winkel, und
e5) eine Aufsummiervorrichtung (49) für die erste und die zweite Partialsumme ($P_1$, $P_2$) zum Erhalten einer ersten Summe, die eine dritte komplexe Zahl oder einen dritten Vektor (50) bestimmt;
f5) eine Synchronisationsvorrichtung zum Ausführen einer Synchronisation durch Bestimmen eines Maximums (16) der Amplitude (15) der dritten komplexen Zahl oder des dritten Vektors.

**22.** Empfänger (11) nach Anspruch 21, welcher an ein digitales Breitbandsignal gemäß einer Codemultiplexverfahrensnorm *[code division multiple access standard]* angepasst ist, wobei der Signalabschnitt eine Chip-Sequenz ($x_1$, $x_2$, ..., $x_{256}$) ist und der erste und der zweite Unterabschnitt Untersequenzen ($S_1$, $S_2$) davon sind.

**23.** Empfänger (11) nach Anspruch 21 oder 22, eine Multiplikationsvorrichtung aufweisend, die insbesondere angepasst ist, um das empfangene elektromagnetische Signal mit einer komplex-konjugierten Codesequenz ($c^*_1$, $c^*_2$, ..., $c^*_{256}$) zu multiplizieren.

**24.** Empfänger (11) gemäß einem der Ansprüche 21 bis 23, welcher zum Empfangen und Verarbeiten eines elektromagnetischen Signales angepasst ist, welches auf eine Trägerfrequenz modulierte gespreizte komplexe Symbole aufweist.

**25.** Empfänger (11) gemäß einem der Ansprüche 21 bis 24, welcher an ein elektromagnetisches Signal angepasst ist, welches Chip-Sequenzen aufweist, von denen jede ein oder mehrere gespreizte komplexe Sendesymbole aufweist.

**26.** Empfänger (11) gemäß einem der Ansprüche 21 bis 25, mit einer Vorrichtung zum Bestimmen eines Maximums der Amplitude der ersten Summe.

**27.** Empfänger (11) nach Anspruch 26, eine Zeitsteuerungssynchronisation mit dem Sender (10) liefernd unter Verwendung der maximalen Amplitude der ersten Summe.

28. Empfänger (11) gemäß einem der vorstehenden Ansprüche 22 bis 27, der eine Unterteilung der Chip-Sequenz ($x_1$, $x_2$, ..., $x_{256}$) in eine Anzahl von Chip-Untersequenzen ($S_1$, $S_8$) liefert, wobei die Anzahl gleich der Anzahl der Chips der Chip-Sequenz ist und/oder die Anzahl gleich einer ganzzahligen Potenz von Zwei ist.

29. Empfänger (11) gemäß einem der Ansprüche 21 bis 28, der eine Entschlüsseln des Signals durch eine Pseudorauschcode-Sequenz ($c^*_1$, $c^*_2$, ..., $c^*_{256}$) liefert.

30. Empfänger (11) nach einem der Ansprüche 21 bis 29, aufweisend einen durch eine Treiberspannung mit Strom versorgten Kristalloszillator und eine Einrichtung zum Abspeichern der Treiberspannung, wenn der Empfänger (11) abgeschaltet wird, und zum Wiederherstellen der Treiberspannung, wenn der Empfänger (11) eingeschaltet wird.

31. Empfänger (11) gemäß einem der Ansprüche 21 bis 30, der eine Verläßlichkeitsvorhersage für die Synchronisation mit dem Sender (10) liefert.

32. Empfänger (11) gemäß einem der Ansprüche 21 bis 31, der eine Verläßlichkeitsvorhersage unter Verwendung von Autokorrelationsfunktionen der Partialsummen liefert.

33. Empfänger (11) nach einem der Ansprüche 21 bis 32, weiterhin aufweisend:

   eine Rechenvorrichtung für eine Vorhersage der Synchronisationsverläßlichkeit,
   eine Vorrichtung zum Vergleichen der Verläßlichkeitsvorhersage mit einer vorbestimmten Zahl, und
   eine eine zweite Summe (14) liefernde Integrationsvorrichtung (13) für den Signalabschnitt ($x_1$, $x_2$, ..., $x_{256}$).

34. Empfänger (11) nach einem der Ansprüche 21 bis 33, der eine Berechnung einer Autokorrelationsfunktion der zweiten Summe (14) liefert.

35. Mobilfunkterminal oder Handapparat für ein digitales Kommunikationsnetzwerk, angepasst zur Implementation des Synchronisationsverfahrens gemäß einem der Ansprüche 1 bis 20 zur Zeitsteuerungs- und/oder Frequenzsynchronisation in Richtung auf das Netzwerk im Fall der Abwärtsstrecke.

36. Basisstation für ein digitales Kommunikationsnetzwerk, angepasst zur Implementation des Synchronisationsverfahrens gemäß einem der Ansprüche 1 bis 20 zur Zeitsteuerungs- und/oder Frequenzsynchronisation in Richtung auf ein Mobilfunkterminal oder Handapparat im Fall einer Aufwärtsstrecke.

**Revendications**

1. Procédé de synchronisation pour un système de communication comprenant un émetteur (10) et un récepteur (11), l'émetteur (10) émettant un signal électromagnétique comprenant une partie de signal et le récepteur (11) recevant ledit signal électromagnétique, dans lequel le système de communication est sujet à un écart de la fréquence du signal électromagnétique reçu par rapport à une fréquence de référence du récepteur (11), ce procédé comprenant les étapes suivantes :

   a1) subdiviser une section de signal ($x_1$, $x_2$, ..., $x_{256}$) du signal reçu (12a) en au moins une première et une deuxième sous-section ($S_1$, $S_2$), ladite section de signal ($x_1$, $x_2$, ..., $x_{256}$) étant associée à ladite partie de signal émis,
   b1) intégrer (41) sur la première sous-section ($S_1$) pour obtenir une première somme partielle ($P_1$) définissant un premier nombre complexe ou vecteur ($P_1$) et intégrer (42) sur la deuxième sous-section ($S_2$) pour obtenir une deuxième somme partielle ($P_2$) définissant un deuxième nombre complexe ou vecteur ($P_2$), le premier et le deuxième nombre complexe ou vecteur ($P_1$, $P_2$) définissant un angle entre eux;
   c1) estimer ledit angle
   **caractérisé en ce que** le procédé comprend en outre les étapes suivantes :
   d1) faire tourner ($D_1$) dudit angle le premier nombre complexe ou vecteur ($P_1$) pour qu'il soit en phase avec le deuxième nombre complexe ou vecteur ($P_2$);
   e1) faire la somme (49) de la première et de la deuxième somme partielle ($P'_1$, $P'_2$) pour obtenir une première somme (50) définissant un troisième nombre complexe ou vecteur (50); et
   f1) utiliser le troisième nombre complexe ou vecteur (50) pour la synchronisation en déterminant un maximum (16) de l'amplitude (15) du troisième nombre complexe ou vecteur.

**EP 1 148 656 B1**

2. Procédé selon la revendication 1, dans lequel
le signal électromagnétique est un signal à large bande numérique conforme à un standard d'accès multiple par répartition par code, ladite section de signal étant une séquence de bribes ($x_1$, $x_2$, ..., $x_{256}$) et la première et la deuxième sous-section étant des sous-séquences ($S_1$, $S_2$) de celle-ci.

3. Procédé selon la revendication 1 ou 2, dans lequel avant l'étape b1), la section de signal ($x_1$, $x_2$, ..., $x_{256}$) est multipliée par la partie de signal conjuguée complexe connue antérieurement du récepteur (11), en particulier ladite partie de signal conjuguée complexe étant une séquence de code conjuguée complexe ($c^*_1$, $c^*_2$, ..., $c^*_{256}$).

4. Procédé selon l'une des revendications précédentes, dans lequel le signal électromagnétique émis comprend des symboles complexes modulés sur une fréquence porteuse.

5. Procédé selon l'une des revendications précédentes, dans lequel la section de signal subdivisée ($x_1$, $x_2$, ..., $x_{256}$) comprend un nombre entier de symboles de transmission complexes étalés, ou consiste sensiblement en ceux-ci.

6. Procédé selon l'une des revendications précédentes, dans lequel le signal électromagnétique émis comprend une séquence d'apprentissage d'un ou plusieurs symboles connus.

7. Procédé selon la revendication 1, dans lequel la synchronisation temporelle entre le récepteur (11) et l'émetteur (10) est obtenue en verrouillant la synchronisation sur l'amplitude maximale (16) du troisième nombre complexe ou vecteur (50).

8. Procédé selon l'une des revendications précédentes, dans lequel la section de signal ($x_1$, $x_2$, ..., $x_{256}$) est subdivisée en un certain nombre de sous-sections ($S_1$, ..., $S_8$), ce nombre étant égal au nombre de symboles ou de bribes de la section de signal ($x_1$, $x_2$, ..., $x_{256}$) et/ou ce nombre étant une puissance entière de deux.

9. Procédé selon l'une des revendications précédentes, dans lequel une tension d'attaque pour un oscillateur à quartz dans le récepteur (11) est mémorisée au moment de la mise hors fonction et est récupérée au moment de la mise en fonction du récepteur (11).

10. Procédé selon l'une des revendications précédentes, dans lequel on détermine une fonction d'autocorrélation des sommes partielles ($P_1$, ..., $P_2$).

11. Procédé selon l'une des revendications précédentes, dans lequel on calcule une prévision de fiabilité pour la synchronisation, de préférence par une ou plusieurs fonctions d'autocorrélation des sommes partielles ($P_1$, ..., $P_2$).

12. Procédé selon l'une des revendications précédentes, dans lequel on estime l'écart de fréquence, de préférence par une ou plusieurs fonctions d'autocorrélation des sommes partielles ($P_1$, ..., $P_2$) .

13. Procédé de synchronisation selon la revendication 1, dans lequel :

l'étape a1) comprend la subdivision d'une section de signal ($x_1$, $x_2$, ..., $x_{256}$) du signal reçu en un premier nombre de sous-séquences de bribes ($S_1$, ..., $S_8$), ce premier nombre étant supérieur à deux, ladite section de signal ($x_1$, $x_2$, ..., $x_{256}$) étant associée à ladite partie de signal émis;
l'étape b1) comprend une intégration (41, ..., 48) sur au moins deux des sous-sections ($S_1$, ..., $S_8$), pour obtenir au moins deux sommes partielles ($P_1$, ..., $P_8$), respectivement, chacune desdites sommes partielles, ($P_1$, ..., $P_8$) définissant un nombre complexe ou vecteur ($P_1$, ..., $P_8$) définissant des angles entre eux, et lesdits nombres complexes ou vecteurs ($P_1$, ..., $P_8$) définissant un premier groupe;

le procédé comprenant les étapes suivantes :

c2) calculer une prévision de fiabilité pour la synchronisation, sur la base du premier groupe de nombres complexes ou vecteurs ($P_1$, ..., $P_8$) ; et

en fonction du résultat de la prévision de fiabilité, soit :

estimer les angles ou un angle moyen entre les nombres complexes ou vecteurs ($P_1$, ..., $P_8$) du premier groupe, faire tourner au moins un des nombres complexes ou vecteurs ($P_1$, ..., $P_8$) de l'angle estimé respectif ou de l'angle moyen, faire la somme (49) d'au moins deux des nombres complexes ou vecteurs (P'$_1$, ..., P'$_8$) du premier groupe pour obtenir une première somme (50) et utiliser la première somme (50) pour la synchronisation, soit intégrer (13) sur sensiblement la section de signal (x$_1$, x$_2$, ... x$_{256}$) entière, pour obtenir une deuxième somme (14) et utiliser la deuxième somme (14) pour la synchronisation.

**14.** Procédé de synchronisation selon la revendication 1, dans lequel l'étape a1) comprend la subdivision d'une section de signal (x$_1$, x$_2$, ..., x$_{256}$) du signal reçu en un premier nombre de sous-séquences de bribes (S$_1$, ..., S$_8$), le premier nombre étant supérieur à deux, ladite section de signal (x$_1$, x$_2$, ..., x$_{256}$) étant associée à ladite partie de signal émis; l'étape b1) comprend une intégration (41, ..., 48) sur au moins deux des sous-sections (S$_1$, ..., S$_8$), pour obtenir au moins deux sommes partielles (P$_1$, ..., P$_8$), respectivement, chacune des sommes partielles (P$_1$, ..., P$_8$) définissant un nombre complexe ou vecteur (P$_1$, ..., P$_8$) définissant des angles entre eux et lesdits nombres complexes ou vecteurs (P$_1$, ..., P$_8$) définissant un premier groupe;
le procédé comprenant les étapes suivantes :

 c2) calculer une prévision de fiabilité pour la synchronisation, sur la base du premier groupe de nombres complexes ou vecteurs (P$_1$, ..., P$_8$) ; et
 b3) en fonction du résultat de la prévision de fiabilité, soit :

  estimer les angles ou un angle moyen entre les nombres complexes ou vecteurs (P$_1$, ..., P$_8$) du premier groupe, faire tourner (D$_1$, ..., D$_8$) au moins un des nombres complexes ou vecteurs (P$_1$, ..., P$_8$) de l'angle estimé respectif ou de l'angle moyen, faire la somme (49) d'au moins deux des nombres complexes ou vecteurs (P'$_1$, ..., P'$_8$) du premier groupe pour obtenir une première somme (50) et utiliser la première somme (50) pour la synchronisation, soit créer un deuxième nombre de sous-sections (S$_1$, ..., S$_8$) de la section de signal (x$_1$, x$_2$, ..., x$_{256}$), ce deuxième nombre étant au moins égal à deux, intégrer sur le deuxième nombre de sous-sections pour obtenir des sommes partielles (P$_1$, ..., P$_8$) définissant des nombres complexes ou vecteurs (P$_1$, ..., P$_8$) définissant un deuxième groupe, lesdits nombres complexes ou vecteurs (P$_1$, ..., P$_8$) définissant des angles entre eux, estimer les angles entre les nombres complexes ou vecteurs (P$_1$, ..., P$_8$) du deuxième groupe, faire tourner (D$_1$, ..., D$_8$) au moins un des nombres complexes ou vecteurs (P$_1$, ..., P$_8$) du deuxième groupe de l'angle estimé respectif ou de l'angle moyen, faire la somme (49) d'au moins deux des nombres complexes ou vecteurs (P'$_1$, ..., P'$_8$) du deuxième groupe, obtenir une troisième somme (50) et utiliser la troisième somme pour la synchronisation.

**15.** Procédé selon la revendication 14, dans lequel
le deuxième nombre est supérieur ou inférieur au premier nombre.

**16.** Procédé selon la revendication 1, dans lequel
les première et deuxième sections (S$_1$, S$_2$) sont de longueur égale; et l'étape c1) comprend les actions suivantes :

 former le conjugué complexe de la première section (S$_1$), multiplier le conjugué complexe de la première section (S$_1$) par la deuxième section (S$_2$), ce qui donne une troisième section de signal, et
 intégrer (41) sur ladite troisième section de signal, ce qui donne un nombre complexe ou vecteur.

**17.** Procédé selon la revendication 16, dans lequel
on détermine une fonction d'autocorrélation complexe du signal ou d'une section de signal et on utilise la phase de ladite fonction d'autocorrélation complexe pour estimer la fréquence du signal.

**18.** Procédé selon la revendication 17, comprenant en outre les étapes suivantes

 f4) normaliser la fonction d'autocorrélation et
 g4) utiliser la fonction d'autocorrélation normalisée pour estimer l'angle entre la première et la deuxième section de signal (S$_1$, S$_2$).

**19.** Procédé selon l'une des revendications 16 ou 18, dans lequel le signal complexe comprend une séquence de nombres complexes, vecteurs ou bribes (x$_1$, x$_2$, ..., x$_{256}$), ou consiste en une telle séquence, en particulier conformément à un système AMRC.

**20.** Procédé selon l'une des revendications 1 à 15, dans lequel une estimation de fréquence selon l'une des revendications 17 à 19 est effectuée, en particulier pour une compensation d'un écart par rapport à une fréquence de référence, en utilisant une puissance intégrée de la fonction d'autocorrélation normalisée.

21. Récepteur (11) pour un signal électromagnétique, sujet à un écart de fréquence de la fréquence du signal électromagnétique reçu, par rapport à une fréquence de référence du récepteur (11), comprenant :

> a5) un moyen pour subdiviser une section de signal ($x_1$, $x_2$, ..., $x_{256}$) du signal électromagnétique reçu en au moins une première et une deuxième sous-section ($S_1$, $S_2$),
> b5) un dispositif d'intégration (41, 42) pour la première et la deuxième sous-section ($S_1$, $S_2$), fournissant une première et une deuxième somme partielle ($P_1$, $P_2$), définissant un premier et un deuxième nombre complexe ou vecteur ($P_1$, $P_2$), respectivement, le premier et le deuxième nombre complexe ou vecteur ($P_1$, $P_2$) définissant un angle entre eux et étant respectivement associés à la première et à la deuxième sous-section ($S_1$, $S_2$),
> c5) un dispositif d'estimation pour l'angle entre le premier et le deuxième nombre complexe ou vecteur ($P_1$, $P_2$), **caractérisé en ce que** le récepteur comprend :
> d5) un dispositif pour produire une rotation ($D_1$, $D_2$) dudit angle pour le premier et/ou le deuxième nombre complexe ou vecteur, et
> e5) un dispositif de sommation (49) pour la première et la deuxième somme partielle ($P_1$, $P_2$) pour obtenir une première somme définissant un troisième nombre complexe ou vecteur (50);
> f5) un dispositif de synchronisation pour effectuer une synchronisation en déterminant un maximum (16) de l'amplitude (15) du troisième nombre complexe ou vecteur.

22. Récepteur (11) selon la revendication 21, adapté à un signal à large bande numérique conforme à un standard d'accès multiple par répartition par code, dans lequel la section de signal est une séquence de bribes ($x_1$, $x_2$, ..., $x_{256}$) et la première et la deuxième sous-section sont des sous-séquences ($S_1$, $S_2$) de celle-ci.

23. Récepteur (11) selon la revendication 21 ou 22, comprenant un dispositif de multiplication, en particulier adapté pour multiplier le signal électromagnétique reçu par une séquence de code conjuguée complexe ($c^*_1$, $c^*_2$, ..., $c^*_{256}$).

24. Récepteur (11) selon l'une quelconque des revendications 21 à 23, adapté pour recevoir et traiter un signal électromagnétique comprenant des symboles complexes étalés, modulés sur une fréquence porteuse.

25. Récepteur (11) selon l'une des revendications 21 à 24, adapté à un signal électromagnétique comprenant des séquences de bribes, chacune d'elles comprenant un ou plusieurs symboles de transmission complexes étalés.

26. Récepteur (11) selon l'une des revendications 21 à 25, comprenant un dispositif pour la détermination d'un maximum de l'amplitude de la première somme.

27. Récepteur (11) selon la revendication 26, établissant une synchronisation temporelle avec l'émetteur (10) en utilisant l'amplitude maximale de la première somme.

28. Récepteur (11) selon l'une des revendications 22 à 27, effectuant une subdivision de la séquence de bribes ($x_1$, $x_2$, ..., $x_{256}$) en un nombre de sous-séquences de bribes ($S_1$, ... $S_8$), ledit nombre étant égal au nombre de bribes de la séquence de bribes et/ou ledit nombre étant une puissance entière de deux.

29. Récepteur (11) selon l'une des revendications 21 à 28, effectuant un désembrouillage du signal par une séquence de code de pseudo-bruit ($c^*_1$, $c^*_2$, ..., $c^*_{256}$).

30. Récepteur (11) selon l'une des revendications 21 à 29, comprenant un oscillateur à quartz alimenté par une tension d'attaque et un moyen pour mémoriser ladite tension d'attaque lorsque le récepteur (11) est mis hors fonction et pour récupérer la tension d'attaque lorsque le récepteur (11) est mis en fonction.

31. Récepteur (11) selon l'une des revendications 21 à 30, produisant une prévision de fiabilité pour la synchronisation avec l'émetteur (10).

32. Récepteur (11) selon l'une des revendications 21 à 31, produisant une prévision de fiabilité en utilisant des fonctions d'autocorrélation des sommes partielles.

33. Récepteur (11) selon l'une des revendications 21 à 32, comprenant en outre :

un dispositif de calcul pour une prévision de fiabilité de synchronisation,
un dispositif pour comparer la prévision de fiabilité avec un nombre prédéterminé, et
un dispositif d'intégration (13) pour la section de signal ($x_1$, $x_2$, ..., $x_{256}$), produisant une deuxième somme (14) .

34. Récepteur (11) selon l'une des revendications 21 à 33, effectuant un calcul d'une fonction d'autocorrélation de la deuxième somme (14).

35. Terminal ou combiné radio mobile pour un réseau de communication numérique, adapté pour exécuter le procédé de synchronisation conforme à l'une des revendications 1 à 20, pour la synchronisation temporelle et/ou de fréquence vis-à-vis du réseau dans le cas de liaison descendante.

36. Station de base pour un réseau de communication numérique, adaptée pour exécuter le procédé de synchronisation conforme à l'une des revendications 1 à 20, pour la synchronisation temporelle et/ou de fréquence vis-à-vis d'un terminal ou combiné radio mobile dans le cas de liaison montante.

Fig. 1

Fig. 2

Integration over
256 chips

Fig. 3

Fig. 4

Fig. 5

$f_0 \times 10^{-4}$ Hz

## Fig. 6

## Fig. 7

**EP 1 148 656 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5579338 A